# EUROPÄISCHE PATENTANMELDUNG

(11) **EP 2 796 632 A1**
(43) Veröffentlichungstag der Anmeldung: **29.10.2014**
(21) Anmeldenummer: 14165362.6
(22) Anmeldetag: 22.04.2014
(51) Int. Cl.: E04B 1/66, E04D 5/12

(54) **Abdichtungsbahn**

(30) Priorität: 24.04.2013 DE 202013101763 U
(71) Anmelder: Gebrüder Jaeger GmbH, 42369 Wuppertal (DE)
(72) Erfinder: SUPANTSCHITSCH, Winfried, D-42579 Heiligenhaus (DE)
(74) Vertreter: Müller, Enno

(57) **Zusammenfassung**

Die Erfindung betrifft eine zwei Längsränder (6, 7) aufweisende flexible Abdichtungsbahn (1) mit einer folienartigen Mittellage (3) und zwei Vlieslagen (4, 5) als Außenlagen sowie einen mit Abdichtungsbahnen abgedichteten Gebäudeboden. Um eine Abdichtungsbahn anzugeben, die insbesondere zur Verklebung mit einem Gebäudeboden günstig ausgebildet ist, schlägt die Erfindung vor, dass die Abdichtungsbahn (1) an jedenfalls einem Längsrand (6, 7) eine entlang des Längsrandes (6, 7) verlaufende Perforierung (8) aufweist. Bezüglich des abgedichteten Gebäudebodens ist darauf abgestellt, dass die in dem Bereich der Übereinanderlage oben liegende Abdichtungsbahn (1) eine entlang ihres Längsrandes verlaufende Perforierung (8) aufweist, während die in diesem Bereich unten liegende Abdichtungsbahn (1) geschlossen ausgebildet ist.

## Beschreibung

Die Erfindung betrifft eine zwei Längsränder aufweisende flexible Abdichtungsbahn mit einer folienartigen Mittellage und zwei Vlieslagen als Außenlagen.

Derartige Abdichtungsbahnen sind bereits in vielfältiger Hinsicht bekannt geworden. Es wird beispielsweise auf die DE 195 07 858 A1 verwiesen. Weiter auch betreffend ein Abdichtband ohne folienartige Mittellage auf die DE 296 16 693 U1.

Solche Abdichtungsbahnen werden insbesondere zur Abdichtung eines Gebäudebodens verwendet. Sie werden mit dem Gebäudeboden verklebt und in diesem Zusammenhang in Randbereichen auch überlappend angeordnet. Hierbei ist beobachtet worden, dass die Verklebung gerade in den Überlappungsbereichen oftmals unzulänglich ist bzw. bis zu einer Verfestigung wesentlich längere Zeit benötigt.

Ausgehend von der aufgezeigten Problematik beschäftigt sich die Erfindung mit der Aufgabenstellung, eine Abdichtungsbahn anzugeben, die insbesondere zur Verklebung mit einem Gebäudeboden günstig ausgebildet ist.

Nach einer ersten Lehre der Erfindung ist die Aufgabe bei einer Abdichtungsbahn gelöst, bei der jedenfalls an einem Längsrand eine entlang des Längsrandes verlaufende Perforierung ausgebildet ist.

Es wurde gefunden, dass diese Perforierung, die an sich der Zielsetzung des Abdichtens entgegengesetzt ist, dann eine günstige Auswirkung hat, wenn sie sich bei der Verlegung der Abdichtungsbahnen in einem Überlappungsbereich zu einer darunter liegenden Abdichtungsbahn befindet. Die Durchgangslöcher, welche die Perforierung insbesondere bilden, können dann wieder durch eine darunter liegende Abdichtungsbahn abgedeckt sein. In Zusammenwirkung auch mit dem aufzubringenden Klebstoff lässt sich gleichwohl die gewünschte Dichtigkeit weiterhin erreichen.

Es wurde gefunden, dass bei einer solchen Ausgestaltung auch in den Überlappungsbereichen der verlegten Abdichtungsbahnen die Verklebung sich in der gewünschten Weise vollzieht. Dies wird darauf zurückgeführt, dass die Perforierung in der Klebstoffmasse, die beispielsweise eine Dispersion mit einem Flüssigkeitsanteil (Wasser) ist, enthaltende Feuchtigkeit günstig entweichen lässt. Während dies bei den geschlossen ausgebildeten Bereichen der Abdichtungsbahn nach unten, in den Boden, der insoweit durchlässig ist, ohne Weiteres möglich ist, ist dies in den Überlappungsbereichen der aufgrund der mittleren Folienlage insbesondere auch bevorzugt praktisch dampfdichten Abdichtungsbahnen nicht ermöglicht.

Eine weitere Lösung der Aufgabe ist bei einem mit Abdichtungsbahnen, die in der beschriebenen Weise zwei Längsränder aufweisen und eine folienartige Mittellage sowie zwei Vlieslagen als Außenlagen, abgedeckten Gebäudeboden dadurch erreicht, dass die Abdichtungsbahnen in Rand-Teilbereichen übereinander liegend angeordnet sind und in dem Bereich der Übereinanderlage jedenfalls die oben liegende Abdichtungsbahn eine entlang ihres Längsrandes verlaufende Perforierung aufweist, während die in diesem Bereich unten liegende Abdichtungsbahn geschlossen ausgebildet ist.

Die Abdichtungsbahn als solche kann grundsätzlich auch beiden Längsrändern zugeordnet mit einer Perforierung ausgebildet sein. Bevorzugt ist sie jedoch im Hinblick auf die im Zusammenhang mit dem Gebäudeboden beschriebene Gestaltung mit nur einem Längsrand zugeordneter Perforierung ausgebildet.

Wenn beide Längsränder eine Perforierung aufweisen, kann die Übereinanderlage auch dadurch gegeben sein, dass in senkrechter Projektion unter bzw. über dem Bereich mit der Perforierung ein geschlossener Bereich der Abdichtungsbahn ausgebildet ist. Somit kann die Feuchtigkeit entweder nach unten oder nach oben in dem Überlappungsbereich günstig entweichen.

Ersichtlich ist beim Verlegen dann darauf zu achten bzw. diese so vorzunehmen, dass in der senkrechten Projektion die Perforierungsbereiche sich nebeneinander befinden.

Weitere Merkmale der Erfindung sind nachstehend beschrieben.

So ist es bevorzugt, dass die Perforierung aus Durchgangslöchern besteht, die einen mindestens der Dicke der Abdichtungsbahn entsprechenden freien Durchmesser aufweisen. Beispielsweise können solche Löcher in die Abdichtungsbahn eingestanzt sein.

Insbesondere ist bevorzugt, dass alle Durchgangslöcher einen selben freien Durchmesser aufweisen. Alternativ ist aber auch möglich, dass Durchgangslöcher mit unterschiedlichen freien Durchmessern, beispielsweise zwei Durchmessern, die sich insoweit wiederholend vorgesehen sind, ausgebildet sind. Ein freier Durchmesser kann bis zu einem 20-fachen der Dicke der Abdichtungsbahn entsprechen. Eine Dicke der Abdichtungsbahn kann beispielsweise zwischen 0,5 mm und 5 mm, bevorzugt bei 0,5 mm bis 1,5 mm, liegen.

Die Perforierung besteht bevorzugt bezogen auf eine Breite der Abdichtungsbahn aus mehreren nebeneinander angeordneten Durchgangslöchern, die jedenfalls bei einer Projektion auf einer Breitenlinie sich nebeneinander befinden. Sie können sich, gegebenenfalls ergänzend aber auch alternativ, auch unmittelbar nebeneinander befinden. Hierbei sind die nur in der Projektion auf die Breitenlinie sich nebeneinander befindlichen Durchgangslöcher bevorzugt mit einem geringeren Abstand zueinander angeordnet als die auf der Breitenlinie auch ohne die Projektion nebeneinander befindlichen Durchgangslöcher.

Die sich jedenfalls bei einer Projektion auf eine Breitenlinie nebeneinander befindenden Durchgangslöcher weisen einen Abstand zueinander auf, der in dieser Projektion einem Viertel oder mehr eines freien Durchmessers eines Durchgangsloches entspricht. Soweit die Durchgangslöcher unterschiedliche freie Durchmesser aufweisen, ist Maßstab hierfür das Durchgangsloch mit dem geringeren oder dem geringsten freien Durchmesser.

Ein praktisches Maß für einen solchen freien Durchmesser beträgt beispielsweise 1 mm bis 10 mm, bevorzugt 2 mm bis 6 mm, weiter bevorzugt 3 mm.

Insbesondere können die Durchgangslöcher einen Abstand zueinander aufweisen, der bis zu einem 10-fachen des freien Durchmessers entspricht.

Auch ist bevorzugt, dass eine am nächsten zu der Längsrandkante angeordnete Durchgangsöffnung in Breitenrichtung zu der Längsrandkante einen Abstand aufweist, der dem 1 ½-fachen oder mehr ihres freien Durchmessers entspricht. Der Abstand kann auch bis hin zum 10-fachen oder mehr, etwa dem 20-fachen, betragen. Wesentlich ist insoweit, dass die Perforierungslinie oder ein Perforierungsbereich, der sich entlang der Randkante erstreckt, der Randkante gegenüber deutlich zurückversetzt - in Breitenrichtung - zum Inneren der Abdichtungsbahn ausgebildet ist. Somit schließt sich in Breitenrichtung gesehen in Richtung der zugeordneten Längsrandkante an einen Perforierungsbereich der Abdichtungsbahn nochmals ein geschlossen ausgebildeter Bereich an.

Absolut gesehen kann dieser geschlossen ausgebildete Bereich, in Breitenrichtung betrachtet, eine Breite von 2 cm bis 10 cm, weiter bevorzugt 3 cm bis 7 cm und darüber hinaus bevorzugt ca. 5 cm aufweisen.

Die Gesamtbreite einer solchen Abdichtungsbahn kann beispielsweise 20 cm bis 100 cm, weiter bevorzugt 40 cm bis 80 cm, darüber hinaus bevorzugt ca. 50 cm bis 70 cm, konkret etwa 60 cm bis 65 cm betragen.

Nachstehend ist die Erfindung des Weiteren anhand der beigefügten Zeichnung, die jedoch lediglich Ausführungsbeispiele veranschaulicht, beschrieben. Hierbei zeigt:
- Fig. 1: eine Abdichtungsbahn-Rolle mit einem Teilstück abgewickelter Abdichtungsbahn;
- Fig. 2: eine Herausvergrößerung eines Bereichs der Abdichtungsbahn gemäß Figur 1;
- Fig. 3: einen Querschnitt durch die Abdichtungsbahn gemäß Figur 2, geschnitten entlang der Linie III - III (nicht maßstäblich); und
- Fig. 4: einen Querschnitt durch einen Bodenaufbau, belegt mit Abdichtungsbahnen.

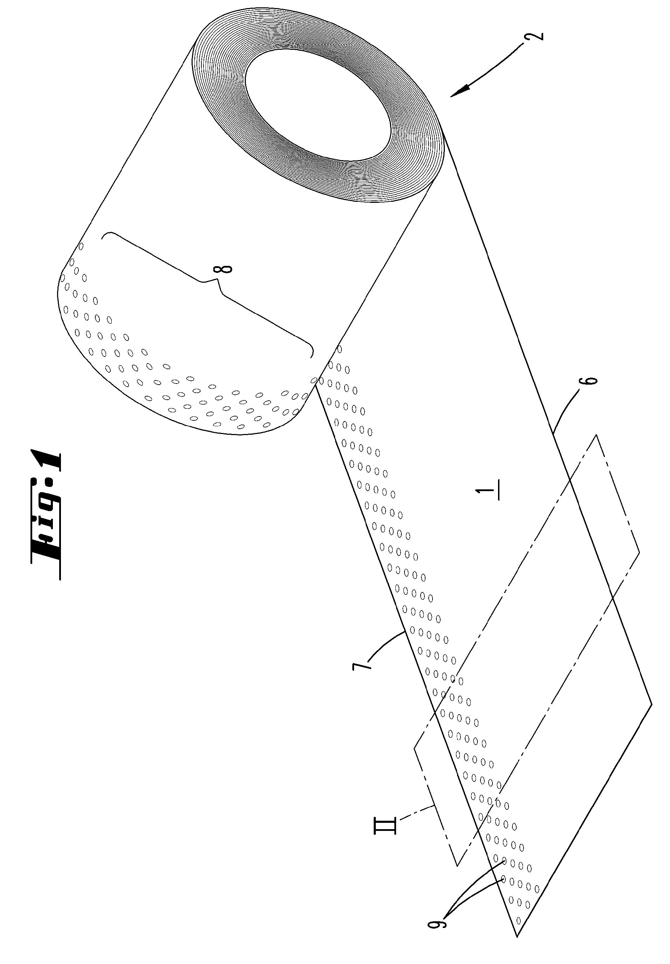

Dargestellt und beschrieben ist, zunächst mit Bezug zu Figur 1, eine auf einer Rolle 2 aufgewickelte Abdichtungsbahn 1.

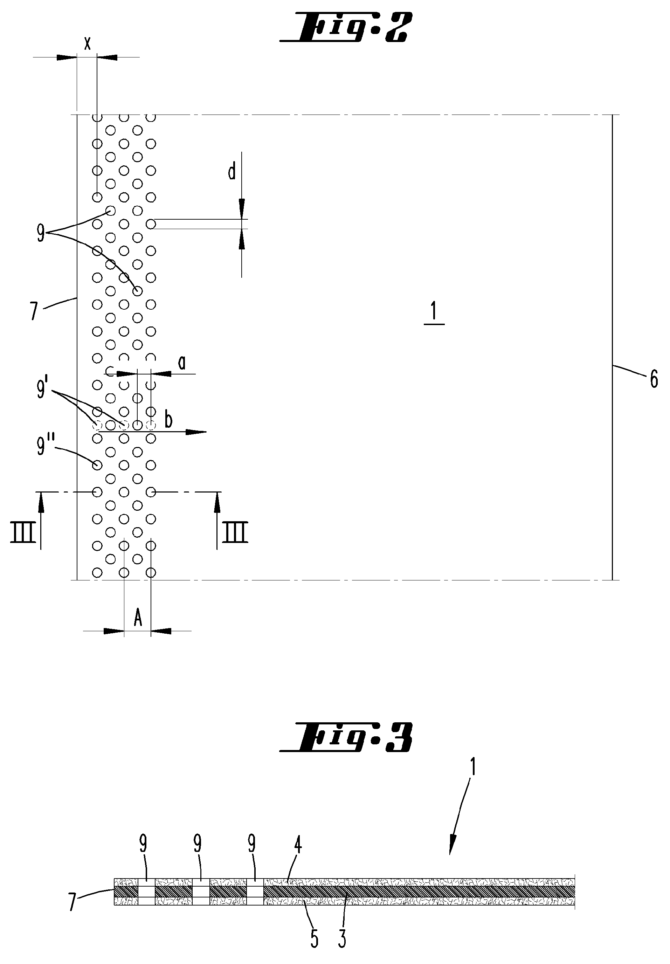

Die Abdichtungsbahn 1 besteht, wie in Figur 3 auch im Einzelnen dargestellt, aus einer folienartigen Mittellage 3 und zwei Vlieslagen 4, 5 als Außenlagen. Die Mittellage 3 ist eine geschlossene Kunststofflage, die insbesondere auch bevorzugt dampfdicht ausgebildet ist bzw. die dampfdichte Ausbildung der Abdichtungsbahn 1 erbringt.

Die Kunststofflage kann beispielsweise aus einem NBR-Material bestehen. Es kann sich auch um ein thermoplastisches Elastomer handeln. Die Kunststoffbahn als solche ist bevorzugt dampfdicht oder jedenfalls im Wesentlichen dampfdicht ausgebildet. Bis auf die Durchgangslöcher ist sie auch vollkommen geschlossen ausgebildet.

Hinsichtlich einer Vlieslage kann es sich beispielsweise um ein Vlies auf Basis eines Spinnvlieses oder eines Faservlieses handeln. Insbesondere kann es sich um ein Wassterstrahl-verfestigtes Vlies handeln. Es kann sich auch um mit einem Bindemittel verfestigte Spinnfasern handeln. Die Fasern bzw. das Grundmaterial des Vlieses bestehen bevorzugt aus Polypropylen. Es kann sich auch beispielsweise hinsichtlich dieses Materials um Polyamid oder Polyester handeln.

Eine solche Vlieslage kann auch wasserblockierend ausgerüstet sein.

Die Abdichtungsbahn 1 weist weiter zwei Längsränder 6, 7 auf. Beim Ausführungsbeispiel ist einem Längsrand, dem Längsrand 7, eine Perforierung 8 zugeordnet. Die Perforierung 8, wie weiter in Bezug auf Figur 2 erläutert ist, besteht aus einer Vielzahl von Durchgangsöffnungen 9. Die Zuordnung der Perforierung 8 zu einem Längsrand 6, 7 bedeutet zunächst, dass die Abdichtungsbahn über einen sehr wesentlichen Anteil ihrer Breite, jedenfalls mehr als die Hälfte bis hin zu beispielsweise ¹⁹/₂₀ ihrer Breite vollständig geschlossen ausgebildet ist. Soweit an beiden Längsrändern Perforierungen ausgebildet sind, ist der geschlossene Bereich dazwischen, über den genannten Breitenanteil, gegeben.

Die Durchgangsöffnungen 9 sind bezogen auf eine Breitenlinie b gegebenenfalls projiziert auf diese Breitenlinie, siehe gestrichelt wiedergegebene Durchgangslöcher 9' nebeneinander angeordnet. Ein Abstand a zwischen zwei Durchgangslöchern 9 bzw. 9', in Richtung der Breitenlinie b kann einem Viertel oder mehr eines freien Durchmessers d eines Durchgangsloches 9, 9' entsprechen. Der Abstand a kann auch bis zu dem 10-fachen eines freien Durchmessers entsprechen. Die auf einer senkrecht zu der zugeordneten Längsrandkante 7 auf einer Breitenlinie b nebeneinander angeordneten realen Durchgangslöcher 9 weisen bevorzugt einen gegenüber dem Abstand a größeren Abstand A auf. Der Abstand A entspricht bevorzugt dem 1 ½-fachen oder mehr des Abstandes a. Etwa bis hin zum 10-fachen des Abstandes a.

Eine am nächsten zu der Längsrandkante 7 angeordnete Durchgangsöffnung 9" weist in Breitenrichtung, also in Richtung einer Breitenlinie b, einen Abstand x zu der Längsrandkante 7 auf, der dem 1-fachen, 1 ½-fachen oder mehr ihres freien Durchmessers d entspricht. Der Abstand kann auch dem 10-fachen oder mehr entsprechen. In absoluter Wertigkeit etwa 3 cm bis 5 cm oder auch bis hin zu 10 cm.

Ein Abstand ist hinsichtlich eines Durchgangsloches 9 immer von/zu dem Mittelpunkt des Loches abgetragen.

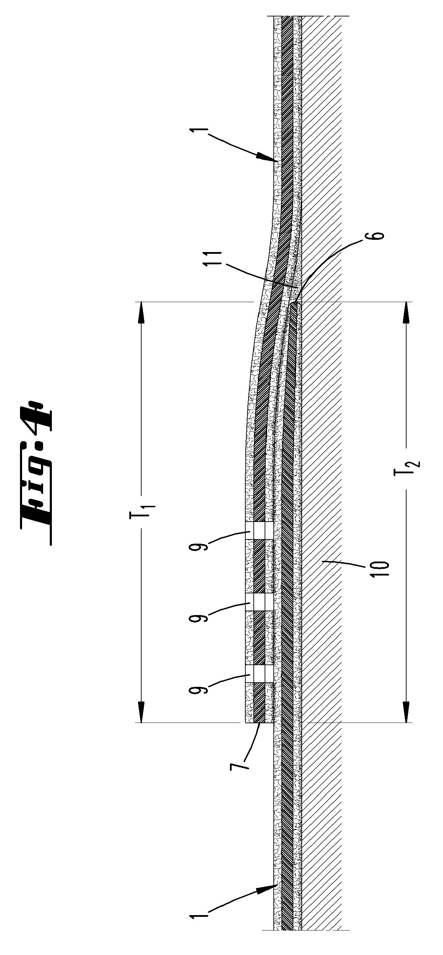

Mit Bezug zu Figur 4 ist schematisch ein mit Abdichtungsbahnen 1, wie sie hier beschrieben sind, belegter Boden 10 dargestellt. Es handelt sich bevorzugt um einen Gebäudeboden. Beispielsweise kann es sich um eine obere Estrichlage handeln, auf welcher die Abdichtungsbahnen 1 aufliegen.

Wesentlich ist, dass die Abdichtungsbahnen 1 in Rand-Teilbereichen T₁ bzw. T₂ übereinander liegend verlegt sind. Sie sind insoweit ersichtlich überlappend verlegt.

Hierbei, bei dem dargestellten Ausführungsbeispiel, weist die den in der Übereinanderlage unteren Rand-Teilbereich T₂ aufweisende Abdichtungsbahn 1 einen diesbezüglichen Randbereich auf, der frei von Durchgangslöchern ist. Dagegen weist die in diesem Überlappungsbereich mit ihrem Rand-Teilbereich T₁ oben liegende Abdichtungsbahn 1 hierin eine Perforierung mit den beschriebenen Durchgangslöchern 9 auf.

Die Abdichtungsbahnen 1 sind mit dem Boden 10 bzw. in den Rand-Teilbereichen T₁ und T₂ gegeneinander mittels einer Klebstoffdispersion 11 mit dem Boden bzw. miteinander verklebt. In dieser Dispersion enthaltene Feuchtigkeit, die zur Erreichung der Verklebung entweichen muss, insbesondere verdunsten muss, kann einerseits unmittelbar in den Boden 10, der insoweit nicht dampfdicht ausgebildet ist, eindringen und andererseits in den Rand-Teilbereichen T₁, T₂ durch die Durchgangslöcher 9 des Rand-Teilbereiches T₁ in die Umgebung entweichen.

Die vorstehenden Ausführungen dienen der Erläuterung der von der Anmeldung insgesamt erfassten Erfindungen, die den Stand der Technik zumindest durch die folgenden Merkmalskombinationen jeweils eigenständig weiterbilden, nämlich:
Eine Abdichtungsbahn, die dadurch gekennzeichnet ist, dass die Abdichtungsbahn 1 an jedenfalls einem Längsrand 6, 7 einen entlang des Längsrandes 6, 7 verlaufende Perforierung 8 aufweist.

Eine Abdichtungsbahn, die dadurch gekennzeichnet ist, dass die Perforierung 8 aus Durchgangslöchern 9, 9" besteht, die einen mindestens der Dicke der Abdichtungsbahn entsprechenden freien Durchmesser d aufweisen.

Eine Abdichtungsbahn, die dadurch gekennzeichnet ist, dass alle Durchgangslöcher 9, 9" einen selben freien Durchmesser d aufweisen.

Eine Abdichtungsbahn, die dadurch gekennzeichnet ist, dass der freie Durchmesser d bis zu dem 20-fach der Dicke der Abdichtungsbahn 1 entspricht.

Eine Abdichtungsbahn, die dadurch gekennzeichnet ist, dass die Perforierung 8 bezogen auf eine Breite der Abdichtungsbahn 1 aus mehreren nebeneinander angeordneten Durchgangslöchern 9, 9" besteht, die sich jedenfalls bei einer Projektion auf eine Breitenlinie b nebeneinander befinden.

Eine Abdichtungsbahn, die dadurch gekennzeichnet ist, dass die sich jedenfalls bei einer Projektion auf eine Breitenlinie b nebeneinander befindenden Durchgangslöcher 9, 9', 9" einen Abstand zueinander aufweisen, der in dieser Projektion einem Viertel oder mehr eines freien Durchmessers dder Durchgangslöcher 9, 9', 9" entspricht.

Eine Abdichtungsbahn, die dadurch gekennzeichnet ist, dass die Durchgangslöcher 9, 9', 9" einen Abstand zueinander aufweisen, der bis zu einem 10-fachen des freien Durchmesser d entspricht.

Eine Abdichtungsbahn, die dadurch gekennzeichnet ist, dass eine am nächsten zu der Längsrandkante 6, 7 angeordnete Durchgangsöffnung 9" in Breitenrichtung zu der Längsrandkante 6, 7 einen Abstand aufweist, der dem 1-fachen oder mehr ihres freien Durchmessers d entspricht.

Eine Abdichtungsbahn, die dadurch gekennzeichnet ist, dass die am nächsten zu der Längsrandkante 6, 7 liegende Durchgangsöffnung 9" einen Abstand aufweist, der dem 10-fachen oder mehr ihres freien Durchmessers d entspricht.

Ein mit Abdichtungsbahnen abgedichteter Gebäudeboden, der dadurch gekennzeichnet ist, dass die in dem Bereich der Übereinanderlage oben liegende Abdichtungsbahn 1 eine entlang ihres Längsrandes verlaufende Perforierung 8 aufweist, während die in diesem Bereich unten liegende Abdichtungsbahn 1 geschlossen ausgebildet ist.

Ein Gebäudeboden, der dadurch gekennzeichnet ist, dass die Abdichtungsbahnen 1 untereinander und mit dem Gebäudeboden 10 mittels einer Klebstoffdispersion 11 verbunden sind.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren mit ihren Merkmalen eigenständige erfinderische Weiterbildungen des Standes der Technik, insbesondere um auf Basis dieser Ansprüche Teilanmeldungen vorzunehmen.

### Bezugszeichenliste

- 1: Abdichtungsbahn
- 2: Rolle
- 3: Mittellage
- 4: Vlieslage
- 5: Vlieslage
- 6: Längsrand
- 7: Längsrand
- 8: Perforierung
- 9: Durchgangsöffnung
- 9': Durchgangsöffnung (projiziert)
- 9": Durchgangsöffnung
- 10: Boden
- 11: Klebstoffdispersion

- a: Abstand
- A: Abstand
- b: Breitenlinie
- d: freier Durchmesser
- x: Abstand
- T₁: oberer Rand-Teilbereich
- T₂: unterer Rand-Teilbereich

## Patentansprüche

1. Zwei Längsränder (6, 7) aufweisende flexible Abdichtungsbahn (1) mit einer folienartigen Mittellage (3) und zwei Vlieslagen (4, 5) als Außenlagen, **dadurch gekennzeichnet, dass** die Abdichtungsbahn (1) an jedenfalls einem Längsrand (6, 7) einen entlang des Längsrandes (6, 7) verlaufende Perforierung (8) aufweist.

2. Abdichtungsbahn (1) nach Anspruch 1, **dadurch gekennzeichnet, dass** die Perforierung (8) aus Durchgangslöchern (9, 9") besteht, die einen mindestens der Dicke der Abdichtungsbahn entsprechenden freien Durchmesser (d) aufweisen.

3. Abdichtungsbahn (1) nach Anspruch 2, **dadurch gekennzeichnet, dass** alle Durchgangslöcher (9, 9") einen selben freien Durchmesser (d) aufweisen.

4. Abdichtungsbahn (1) nach einem der Ansprüche 2 oder 3, **dadurch gekennzeichnet, dass** der freie Durchmesser (d) bis zu dem 20-fach der Dicke der Abdichtungsbahn (1) entspricht.

5. Abdichtungsbahn (1) nach einem der Ansprüche 2 bis 4, **dadurch gekennzeichnet, dass** die Perforierung (8) bezogen auf eine Breite der Abdichtungsbahn (1) aus mehreren nebeneinander angeordneten Durchgangslöchern (9, 9") besteht, die sich jedenfalls bei einer Projektion auf eine Breitenlinie (b) nebeneinander befinden.

6. Abdichtungsbahn (1) nach Anspruch 5, **dadurch gekennzeichnet, dass** die sich jedenfalls bei einer Projektion auf eine Breitenlinie (b) nebeneinander befindenden Durchgangslöcher (9, 9', 9") einen Abstand zueinander aufweisen, der in dieser Projektion einem Viertel oder mehr eines freien Durchmessers (d)der Durchgangslöcher (9, 9', 9") entspricht.

7. Abdichtungsbahn (1) nach einem der Ansprüche 2 bis 6, **dadurch gekennzeichnet, dass** die Durchgangslöcher (9, 9', 9") einen Abstand zueinander aufweisen, der bis zu einem 10-fachen des freien Durchmesser (d) entspricht.

8. Abdichtungsbahn (1) nach einem der Ansprüche 2 bis 7, **dadurch gekennzeichnet, dass** eine am nächsten zu der Längsrandkante (6, 7) angeordnete Durchgangsöffnung (9") in Breitenrichtung zu der Längsrandkante (6, 7) einen Abstand aufweist, der dem 1-fachen oder mehr ihres freien Durchmessers (d) entspricht.

9. Abdichtungsbahn (1) nach Anspruch 8, **dadurch gekennzeichnet, dass** die am nächsten zu der Längsrandkante (6, 7) liegende Durchgangsöffnung (9") einen Abstand aufweist, der dem 10-fachen oder mehr ihres freien Durchmessers (d) entspricht.

10. Mit Abdichtungsbahnen (1), die flexibel sind, zwei Längsränder (6, 7) aufweisen sowie eine folienartige Mittellage (3) und zwei Vlieslagen (5, 6) als Außenlagen, abgedichteter Gebäudeboden (10), wobei die Abdichtungsbahnen (1) in Rand-Teilbereich (T₁, T₂) übereinander liegend angeordnet sind, **dadurch gekennzeichnet, dass** die in dem Bereich der Übereinanderlage oben liegende Abdichtungsbahn (1) eine entlang ihres Längsrandes verlaufende Perforierung (8) aufweist, während die in diesem Bereich unten liegende Abdichtungsbahn (1) geschlossen ausgebildet ist, wobei, bevorzugt, die Abdichtungsbahnen (1) untereinander und mit dem Gebäudeboden (10) mittels einer Klebstoffdispersion (11) verbunden sind.
